# EUROPEAN PATENT SPECIFICATION

(11) **EP 3 909 694 B1**
(45) Date of publication and mention of the grant of the patent: **13.09.2023**
(21) Application number: 21173729.1
(22) Date of filing: 13.05.2021
(51) Int. Cl.: B08B 9/08, B08B 9/093, C07D 251/60

(54) **METHOD FOR WASHING A SEPARATOR FOR PROCESSING MOLTEN UREA AND RELATIVE SEPARATION EQUIPMENT**
VERFAHREN ZUM WASCHEN EINES SEPARATORS ZUR VERARBEITUNG VON GESCHMOLZENEM HARNSTOFF UND ENTSPRECHENDE TRENNVORRICHTUNG
PROCÉDÉ DE LAVAGE D'UN SÉPARATEUR POUR LE TRAITEMENT D'URÉE FONDUE ET ÉQUIPEMENT DE SÉPARATION ASSOCIÉ

(30) Priority: 14.05.2020 IT 202000010990
(43) Date of publication of application: 17.11.2021
(73) Proprietor: EUROTECNICA MELAMINE AG, 8832 Wollerau (CH)
(72) Inventor: SANTUCCI, Roberto, I-21050 Gorla Maggiore (VA) (IT); DE AMICIS, Alberto, I-20097 San Donato Milanese (MI) (IT); DI RUOCCO, Giuseppe, I-23900 Lecco (IT)
(74) Representative: De Gregori, Antonella

(56) References cited:
- EP-A2- 1 792 666
- EP-A2- 2 226 450
- DE-U1- 20 020 882
- FR-A1- 3 031 982
- GB-A- 1 215 836
- US-A- 4 241 744
- US-A1- 2004 226 587

## Description

The present invention describes a method for washing a separator for molten urea and the relative separation equipment.

More specifically, the present invention forms part of the industrial field of the transformation of urea, in particular for the production of melamine. Even more specifically, the present invention relates to a method for washing a separator for processing molten urea, the relative separation equipment and the relative plant, in particular for the production of melamine by means of a high-pressure process.

### STATE OF THE ART

The document GB-A-1215836 discloses a droplet separator used in a method for processing molten urea, and a method for washing a droplet separator.

The production of melamine by the pyrolysis of urea according to the overall reaction (1), is known:

6 NH₂CONH₂ --7 (CN)₃(NH₂)₃ + 6 NH₃ + 3 CO₂ (1)

urea melamine said reaction, as is known, being highly endothermic.

Processes for the transformation of urea into melamine are divided into two groups: processes that carry out the pyrolysis of urea at high pressure and processes that carry out the pyrolysis of urea at low pressure.

Both processes are typically carried out in reactors that are fed with a stream of molten urea. The reactor is preferably also fed with a stream of ammonia.

In high-pressure processes, the reaction chamber is always kept at a pressure above 60 bars and is equipped with heating means that keep the reagent system at a temperature of about 360°C - 450°C.

The present invention relates in particular to processes for preparing melamine at high pressure. More specifically, for producing melamine, the urea must be moved and pressurized in the liquid state with a concentration higher than 99.8%, then melted, taking it from a vacuum separator, if the urea is supplied to the plant in an aqueous solution and must be concentrated inside the plant itself, or from a buffer tank kept under light pressure, if the urea is supplied to the melamine plant already concentrated, to a reactor operating at a pressure of about 80 bars.

Absolute vacuum separators, in which the molten urea is at a concentration higher than 99%, are subject to the formation of encrustations due to the retention of droplets of urea, carried by the rising vapours, on the walls of the separator itself not immersed in the urea.

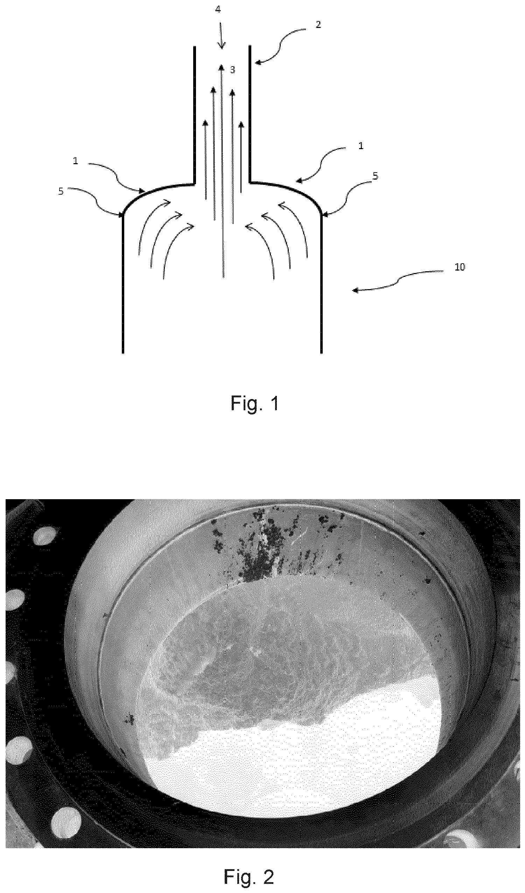

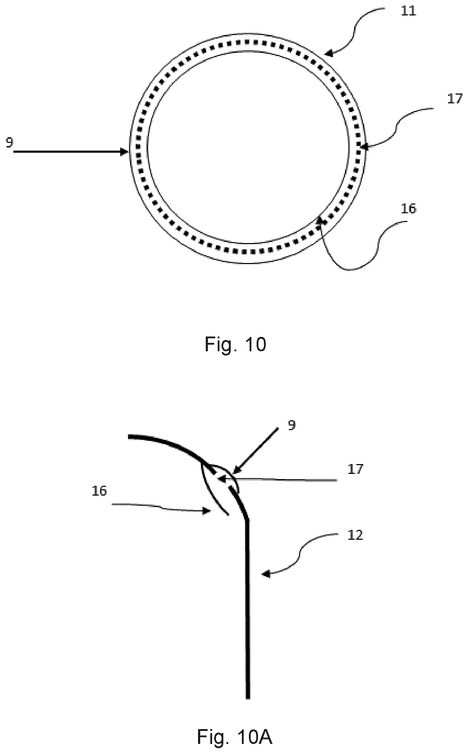

The phenomenon of the formation of encrustations is maximum in the calm areas, i.e. in the areas in which the drops of urea carried by the steam remain dry, as they are no longer continuously lapped by the steam itself; these quiet areas of the separator can be mainly found in the vicinity of the tangent lines between the cylindrical side wall of the separator and the head cap of the separator, in the centre of which the vapour outlet pipe is positioned, as can be seen in figure 1. In figure 1, 10 indicates the separator, 1 indicates the calm areas, 2 indicates the vapour outlet pipe 3, 4 the outlet mouth from the separator and 5 the joining point between the cylindrical wall of the separator and the head cap of the separator.

The vapours 3 that rise upwards tend to be conveyed towards the outlet pipe 2, increasing their speed as they approach the outlet 4, creating an area of maximum central speed and an area of minimum peripheral speed, tending to zero in contact with the walls of the separator.

The drops formed on the hemispherical cap forming the roof of the separator 10 consequently slide outwards, reaching the calm area 1 where, as they are no longer lapped by the vapours, they dry up, remaining stuck to the wall of the separator 10, in turn creating a support point for subsequent drops.

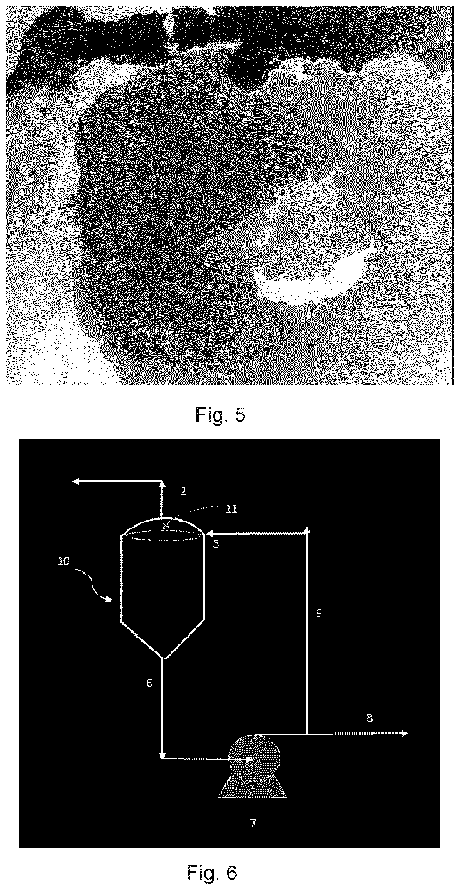

The urea which constitutes these droplets therefore remains for a long time in contact with the wall of the separator and is therefore subject to degradation with the formation of by-products which solidify, in turn retaining new urea with growth of the layer in contact with the separator wall until the partial, and sometimes total, clogging of the upper part of the separator itself, as is evident from figure 2 where the upper part of a separator is photographed.
When the clogging of the separator reaches proportions such as to compromise the functioning of the separator itself, giving rise to a decrease in the vacuum degree, it becomes necessary to stop the system for the removal of the encrustations, as shown in figure 5.

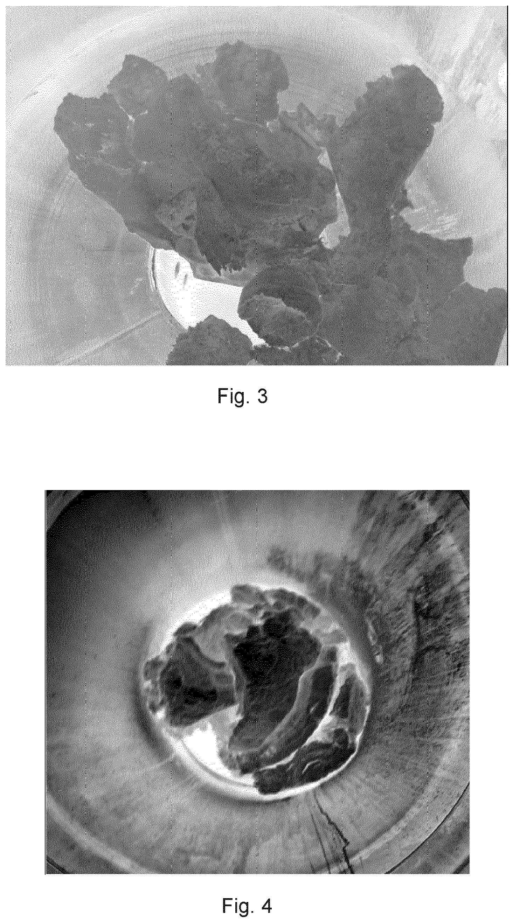

A further problem is represented by the detachment of the crusts which, falling into the lower area of the separator, clog however the outlet or, if they have a limited size, reach the suction of the pump causing cavitation, as shown in figure 3 and in figure 4.

The objective of the present invention is to overcome the drawbacks and problems previously indicated that characterize the state of the art.

The Applicant has in fact surprisingly found a method for washing a separator for processing molten urea which prevents the formation of encrustations of urea on the internal surface of the walls of the separator itself.

The Applicant has also found a separator for processing molten urea which allows the washing of the walls of the separator itself to be effected in a particularly effective way.

The present invention therefore relates, in accordance with claim 1, to a method for washing a separator for processing molten urea, comprising a continuous recirculation of at least a portion of the molten urea taken from the bottom of said separator, wherein this portion of molten urea withdrawn is continuously flushed on the upper portion of the cylindrical side wall of the separator, said flow being distributed along the whole circumference of the internal cylindrical side wall of said separator.

The supply of the recirculation or flow of the portion of molten urea withdrawn and recirculated is preferably positioned above the tangent line(s) that connect the upper portion of the internal cylindrical side wall of the separator and the upper cap that forms the separator roof.

The ratio between the quantity of recycled urea and the total quantity of urea leaving the separator is preferably within a range of 66% to 80% by weight.

This ratio makes it possible to create a flow of recycled urea such as to guarantee the complete coverage of the whole circumference of the cylindrical wall of the separator, thus achieving an effective continuous washing of the wall, without however recycling a greater quantity of urea than necessary.

Furthermore, the ratio between the quantity of recycled urea and the quantity of urea fed to a melamine synthesis reactor preferably ranges from 200 to 400% by weight.

Taking into account, in fact, that the dimensions of the separator are defined in relation to the flow-rate of steam to be discharged upwards, which, in turn, is in relation to the concentration and flow-rate of diluted urea that is fed to the separator, the latter being, in turn, in relation to the quantity of urea fed to the reactor, the quantity of urea recycled, i.e. the degree of recycling, can also be calculated on the basis of the flow-rate/quantity of urea fed or to be fed to the reactor.

Furthermore, the recycling of urea is carried out by distributing a liquid film of urea over the whole circumference of the cylindrical side wall, without the presence of droplets in free fall and/or without the formation of nebulized phases.

The present invention therefore relates, in accordance with claim 6, to a separator for processing molten urea comprising at least one distributor element configured for for feeding recycled urea to said separator, wherein said distributor element is positioned above the tangent line(s) that connect the upper portion of the internal cylindrical side wall of the separator and the upper cap which forms the roof of the separator.

Said at least one distributor element can be positioned internally or externally with respect to the separator.
Said at least one distributor element, when positioned externally, can provide at least one unidirectional tangential inlet, at least one bidirectional tangential inlet or can be produced by means of a coaxial circumferential distributor.

The term "coaxial" refers to the position of the distributor with respect to the separator.

Said coaxial circumferential distributor can be composed of a half-pipe, welded on the external surface of the separator, wherein there are a series of openings on said external surface of the separator, suitable for feeding and distributing the recirculating urea along the whole circumference of the cylindrical side wall inside the separator.

Said openings can internally provide a deflector suitable for preventing the urea, exiting from the openings, from becoming detached from the internal wall of the separator.

Said at least one distributor element, when positioned internally, can consist of a coaxial pipe provided with openings, preferably holes, suitable for feeding and distributing the recirculating urea along the whole circumference of the internal cylindrical side wall of the separator.

In a first embodiment of the separator according to the present invention, the distributor element positioned externally can comprise at least four unidirectional tangential inlets.

When the above-mentioned distributor element comprises four unidirectional tangential inlets, said inlets are positioned at 90° with respect to each other.

In a different embodiment of the separator according to the present invention, the distributor element positioned externally can comprise at least three bidirectional tangential inlets.

When the above-mentioned distributor element comprises three bidirectional tangential inlets, said inlets are positioned at 120° with respect to each other.

In a further embodiment of the separator according to the present invention, this can preferably comprise at least one unidirectional distributor element, positioned internally and coaxial with respect to the separator, wherein said distributor element can be a pipe provided with openings or perforated, said openings or even more preferably the holes of said pipe preferably facing the side wall of the separator, even more preferably with a downward angle of 30° with respect to the horizontal plane, so that the urea to be recycled is directed towards the lower part of the separator .

Horizontal plane refers to a plane perpendicular to the side wall of the separator, considered as the vertical plane.

In a different embodiment of the separator according to the present invention, this can preferably comprise at least one bidirectional distributor element, positioned internally and coaxial with respect to the separator, wherein said distributor element can be a pipe provided with openings or with holes, the openings or more preferably the holes of said pipe preferably facing the side wall of the separator, more preferably with a downward angle of 30° with respect to the horizontal plane, so that a portion of the urea to be recycled is directed towards the lower part of the separator, even more preferably with an alternation of openings or holes, wherein the washing openings or holes of the inner wall of the separator are at a downward angle of 30° with respect to the horizontal plane, so that a portion of the urea to be recycled is directed towards the lower part of the separator and the washing openings or holes of the upper part of the distributor have an upward angle of 90° with respect to the horizontal plane, so that a portion of the urea to be recycled is directed towards the upper part of the distributor itself, thus keeping the upper surface of the distributor continuously flushed and avoiding the settling of urea on its surface, and wherein the washing openings or holes in the upper part of the distributor have a passage surface ranging from 6 to 25% of the passage surface of the washing openings or holes of the inner wall of the separator.

The lower part of the separator refers to the part of the separator from which concentrated urea exits, whereas the upper part of the separator refers to the part of the separator where the vapour outlet pipe is located.

The distributor element of the separator according to the present invention is particularly advantageous in that it prevents the urea to be recycled, fed for washing the separator, from being entrained upwards by the vapours that are released from the diluted urea during its concentration, with consequent clogging of the vapour outlet area.

A further advantage of the distributor element of the separator according to the present invention is that it is capable of feeding the urea so as to form a liquid film over the whole circumference without the presence of droplets in free fall and/or without the formation of nebulized phases.

Furthermore, said distributor elements allow the formation of surfaces which can in turn create a support for the formation of crusts of urea, to be avoided or in any case reduced as much as possible.

The present disclosure further relates to a plant for the production of high-pressure melamine comprising a separator for processing molten urea which comprises at least one distributor element suitable for feeding recycled urea to said separator, wherein said distributor element is positioned above the tangent line(s) which connect the upper portion of the cylindrical side wall of the separator and the upper cap that forms the roof of the separator.

Further characteristics and advantages of the method and separator according to the present invention will become more evident from the following detailed description of some preferred embodiments of the separator, with reference to the attached figures.

In said attached figures, figures 1-5 have been previously described, whereas
- figure 6 is a schematic representation of the part of the plant for the high-pressure synthesis of melamine comprising the separator for processing molten urea according to the present invention;
- figure 7 is a schematic view of a distributor element positioned externally with unidirectional tangential inlets;
- figure 8 is a schematic view of a distributor element positioned externally, similar to that of figure 7, but with tangential inlets of the bidirectional type;
- figure 9 is a schematic view of a separator with distributing elements positioned internally, coaxially: figures 9a-9c show details of the distribution element of figure 9:
   figure 9a shows a schematic view of the distributor element of figure 9 produced by means of a pipe provided with openings or holes;
   figure 9b shows a schematic view of the hole in the distributor element of figure 9 produced by means of a pipe provided with openings or perforated with unidirectional distribution;
   figure 9c shows a schematic view of the openings or holes of the distributor element of figure 9 produced by means of the pipe provided with openings or perforated with bidirectional distribution;
- figure 10 is a schematic view of a coaxial distributor element positioned externally with respect to the separator, produced by means of a welded half-pipe: figure 10a shows a particular embodiment of the distributor element of figure 10:
   figure 10a shows a schematic view of the distributor element positioned externally with respect to the separator produced by means of a welded half-pipe, wherein the distribution is effected through inlet openings or holes formed directly on the separator wall and with an internal deflector.

In the following description, for illustrating the figures, identical reference numbers are used for indicating construction elements with the same function. Furthermore, for clarity of illustration, some numerical references may not be repeated in all the figures.

With reference to figure 6, a part of a plant for the synthesis of melamine at high pressure is schematically shown, comprising the separator for processing molten urea according to the present invention: the separator indicated with 10 provides an outlet duct for concentrated urea 6 wherein the stream of concentrated urea is partly directed, by means of a suitable pump 7, to the synthesis of melamine 8 and partly directed to recycling 9 to carry out the washing process of the separator 10 according to the present invention.

The urea to be recycled is fed in 5 to the distributor element 11.

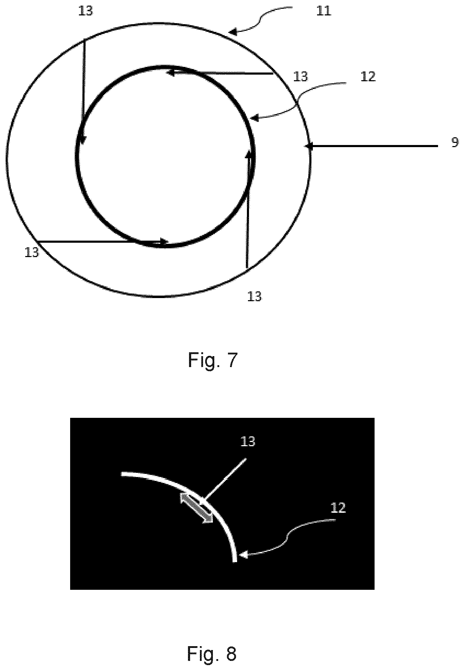

Figure 7 shows a distributor element 11 positioned externally with respect to the wall 12 of the separator 10 with four tangential inlets 13 of the unidirectional type, each inlet 13 positioned at an angle of 90° with respect to the direction of another inlet 13.

Figure 8 shows a detail of a bidirectional tangential inlet 13 of a distributor element 11 (not shown in the figure).

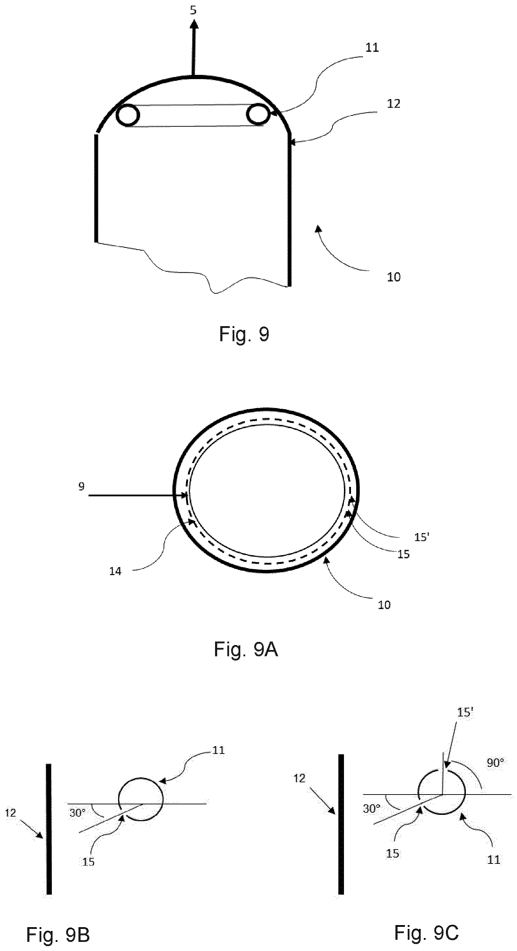

Figure 9 shows a separator 10 with the distributor element 11 positioned internally with respect to the wall 12 of the separator. More specifically, figure 9a shows the distributor element 11 consisting of a perforated pipe 14 with holes 15 or with alternating holes 15 and 15' in the case of a bidirectional distributor. Figure 9b shows the detail of the hole 15 of the distributor element 11 of figure 9, produced by means of a perforated pipe 14 with unidirectional distribution, wherein said hole 15 faces the side wall 12 of the separator 10 at a downward angle of 30° with respect to the horizontal plane, so that the urea to be recycled is directed towards the lower part of the separator 10. Figure 9c shows the detail of the holes 15 and 15' of the distributor element 11 of figure 9, produced by means of a perforated pipe 14 with bidirectional distribution, wherein said perforated pipe 14 provides an alternation of holes 15 and 15', wherein the washing holes 15 of the inner wall 12 of the separator 10 have a downward angle of 30° with respect to the horizontal plane, so that a portion of the urea to be recycled is directed towards the lower part of the separator 10 and the washing holes 15' of the upper part of the distributor 11 have an upward angle of 90° with respect to the horizontal plane, so that a portion of the urea to be recycled is directed towards the upper part of the distributor 11, thus avoiding the retention of urea on the upper surface of the distributor itself and the consequent formation of encrustations.

Figure 10 shows a distributor element 11 positioned externally with respect to the separator 10 and coaxial to the separator 10, produced by means of a half-pipe welded to the external surface of the separator 10, wherein 16 indicates the feeding holes of the urea to be recycled, present in the wall 12 of the separator 10 and 17 the internal deflector. Figure 10a shows the detail of the external distributor 11, produced by means of a welded half-pipe, wherein the distribution is effected through inlet holes 16 and an internal deflector 17.

From the embodiments described above, further variants are possible, without departing from the disclosure of the invention which is delimited by the appended claims.

Finally, it is evident that a high-pressure melamine production plant comprising the separator object of the present invention can undergo numerous modifications and variations, insofar as these are within the scope of the invention which is delimited by the appended claims. In practice, the materials used, as also the dimensions, can vary according to technical requirements.

## Claims

1. A method for washing a separator (10) for processing molten urea, comprising a continuous recirculation of at least a portion of the molten urea taken from the bottom of said separator, wherein said portion of molten urea withdrawn is continuously flushed on the upper portion of the cylindrical side wall (12) of the separator, said flow being distributed along the whole circumference of the internal cylindrical side wall of said separator.

2. The method according to claim 1, wherein the flow of molten urea withdrawn and recirculated is fed above the tangent line(s) that connect the upper portion of the internal cylindrical side wall of the separator with the upper cap that forms the top of the separator.

3. The method according to one or more of the previous claims, wherein the ratio between the quantity of recycled urea and the total quantity of urea leaving the separator is within a range that varies from 66% to 80% by weight.

4. The method according to one or more of the previous claims, wherein the ratio between the quantity of recycled urea and the quantity of urea fed to a melamine synthesis reactor ranges from 200 to 400% by weight.

5. The method according to one or more of the previous claims, wherein the recycling of urea is carried out by distributing a liquid film of urea over the whole circumference of the cylindrical side wall of the separator, without the presence of droplets in free fall and/or without the formation of nebulized phases.

6. A separator (10) for processing molten urea comprising at least one distributor element (11) configured for feeding urea to be recycled to said separator (10), wherein said distributor element (11) is positioned above the connecting tangent lines (5) between the upper portion of the internal cylindrical side wall (12) of the separator (10) and the upper cap which forms the top of the separator (10).

7. The separator according to claim 6, wherein the at least one distributor element (11) is positioned internally or externally with respect to the separator (10).

8. The separator according to claim 7, wherein the distributor element (11), positioned externally, has at least one unidirectional tangential inlet (13) or at least one bidirectional tangential inlet (13) or is a coaxial circumferential distributor (11).

9. The separator according to claim 7, wherein the distributor element (11), positioned externally, has at least four unidirectional tangential inlets (13), said inlets (13) being preferably positioned at 90° with respect to each other, or it has at least three bidirectional tangential inlets (13), said inlets (13) being positioned at 120° with respect to each other.

10. The separator according to claim 8, wherein the circumferential coaxial distributor element (11) consists of a half-pipe, welded on the external surface of the side wall (12) of the separator (10), wherein on said external surface of the side wall (12) of the separator (10), there is a series of openings (16) suitable for feeding and distributing the recirculating urea along the whole circumference of the internal cylindrical side wall (12) of the separator (10), said openings (16) being preferably provided internally with a deflector (17).

11. The separator according to claim 7, wherein the distributor element (11), positioned internally, consists of a pipe (14), coaxial with the separator, provided with openings (15), preferably holes, suitable for feeding and distributing the recirculating urea along the whole circumference of the internal cylindrical side wall of the separator.

12. The separator according to claim 11, wherein the distributor element (11), positioned internally, is unidirectional and the openings (15) of the coaxial pipe (14) face the side wall (12) of the separator (10), preferably with a downward angle of 30° with respect to the horizontal plane.

13. The separator according to claim 11, wherein the distributor element (11), positioned internally, is bidirectional and the openings (15) of the coaxial pipe (14) face the side wall (12) of the separator (10), preferably with a downward angle of 30° with respect to the horizontal plane, more preferably the coaxial pipe (14) has an alternation of openings or holes (15, 15'), wherein the washing openings or holes (15) of the internal side wall (12) of the separator (10) have a downward angle of 30° with respect to the horizontal plane and the washing openings or holes (15') of the upper portion of the distributor (11) have an upward angle of 90° with respect to the horizontal plane and wherein the washing openings or holes (15') of the upper portion of the distributor (11) have a passage surface ranging from 6 to 25% of the passage surface of the washing openings or holes (15) of the internal side wall (12) of the separator (10).

## Patentansprüche

1. Verfahren zum Waschen eines Abscheiders (10) zum Verarbeiten von geschmolzenem Harnstoff, umfassend ein kontinuierliches Rezirkulieren von mindestens einem Abschnitt des geschmolzenen Harnstoffs, der von dem Boden des Abscheiders entnommen wird, wobei der Abschnitt des abgezogenen geschmolzenen Harnstoffs kontinuierlich auf dem oberen Abschnitt der zylindrischen Seitenwand (12) des Abscheiders gespült wird, wobei die Strömung entlang des gesamten Umfangs der inneren zylindrischen Seitenwand des Abscheiders verteilt wird.

2. Verfahren nach Anspruch 1, wobei die Strömung des abgezogenen und rezirkulierten geschmolzenen Harnstoffs oberhalb der Tangentenlinie(n) zugeführt wird, die den oberen Abschnitt der inneren zylindrischen Seitenwand des Abscheiders mit der oberen Kappe verbinden, die die Oberseite des Abscheiders bildet.

3. Verfahren nach einem oder mehreren der vorhergehenden Ansprüche, wobei das Verhältnis zwischen der Menge an recyceltem Harnstoff und der Gesamtmenge an Harnstoff, die den Abscheider verlässt, in einem Bereich liegt, der von 66 Gew.-% bis 80 Gew.-% variiert.

4. Verfahren nach einem oder mehreren der vorhergehenden Ansprüche, wobei das Verhältnis zwischen der Menge an recyceltem Harnstoff und der Menge an Harnstoff, die einem Melaminsynthesereaktor zugeführt wird, im Bereich von 200 bis 400 Gew.-% liegt.

5. Verfahren nach einem oder mehreren der vorhergehenden Ansprüche, wobei das Recycling von Harnstoff durch Verteilen eines flüssigen Harnstofffilms über den gesamten Umfang der zylindrischen Seitenwand des Abscheiders ohne das Vorhandensein von Tröpfchen im freien Fall und/oder ohne die Bildung von vernebelten Phasen durchgeführt wird.

6. Abscheider (10) zum Verarbeiten von geschmolzenem Harnstoff, umfassend mindestens ein Verteilerelement (11), das zum Zuführen von zu recycelndem Harnstoff zu dem Abscheider (10) konfiguriert ist, wobei das Verteilerelement (11) über den verbindenden Tangentenlinien (5) zwischen dem oberen Abschnitt der inneren zylindrischen Seitenwand (12) des Abscheiders (10) und der oberen Kappe, die die Oberseite des Abscheiders (10) bildet, positioniert ist.

7. Abscheider nach Anspruch 6, wobei das mindestens eine Verteilerelement (11) bezüglich des Abscheiders (10) innen oder außen positioniert ist.

8. Abscheider nach Anspruch 7, **dadurch gekennzeichnet, dass** das Verteilerelement (11), das außen positioniert ist, wenigstens einen unidirektionalen tangentialen Einlass (13) oder wenigstens einen bidirektionalen tangentialen Einlass (13) aufweist oder ein koaxialer Umfangsverteiler (11) ist.

9. Abscheider nach Anspruch 7, wobei das Verteilerelement (11), das außen positioniert ist, mindestens vier unidirektionale tangentiale Einlässe (13) aufweist, wobei die Einlässe (13) vorzugsweise bei 90° zueinander positioniert sind, oder es mindestens drei bidirektionale tangentiale Einlässe (13) aufweist, wobei die Einlässe (13) bei 120° zueinander positioniert sind.

10. Abscheider nach Anspruch 8, wobei das umlaufende koaxiale Verteilerelement (11) aus einem Halbrohr besteht, angeschweißt an die äußere Oberfläche der Seitenwand (12) des Abscheiders (10), wobei an der äußeren Oberfläche der Seitenwand (12) des Abscheiders (10) eine Reihe von Öffnungen (16) vorhanden ist, geeignet zum Zuführen und Verteilen des rezirkulierenden Harnstoffs entlang dem gesamten Umfang der inneren zylindrischen Seitenwand (12) des Abscheiders (10), wobei die Öffnungen (16) vorzugsweise innen mit einem Deflektor (17) versehen sind.

11. Abscheider nach Anspruch 7, wobei das Verteilerelement (11), das innen positioniert ist, aus einem Rohr (14) besteht, das koaxial mit dem Abscheider ist und mit Öffnungen (15), vorzugsweise Löchern, versehen ist, die zum Zuführen und Verteilen des rezirkulierenden Harnstoffs entlang des gesamten Umfangs der inneren zylindrischen Seitenwand des Abscheiders geeignet sind.

12. Abscheider nach Anspruch 11, wobei das Verteilerelement (11), das innen positioniert ist, unidirektional ist und die Öffnungen (15) des koaxialen Rohrs (14) der Seitenwand (12) des Abscheiders (10) zugewandt sind, vorzugsweise mit einem Abwärtswinkel von 30° in Bezug auf die horizontale Ebene.

13. Abscheider nach Anspruch 11, wobei das Verteilerelement (11), das innen positioniert ist, bidirektional ist und die Öffnungen (15) des koaxialen Rohrs (14) der Seitenwand (12) des Abscheiders (10) zugewandt sind, vorzugsweise mit einem Abwärtswinkel von 30° in Bezug auf die horizontale Ebene, wobei bevorzugter das koaxiale Rohr (14) einen Wechsel von Öffnungen oder Löchern (15, 15') aufweist, wobei die Waschöffnungen oder Löcher (15) der inneren Seitenwand (12) des Abscheiders (10) einen Abwärtswinkel von 30° in Bezug auf die horizontale Ebene aufweisen und die Waschöffnungen oder Löcher (15') des oberen Abschnitts des Verteilers (11) einen Aufwärtswinkel von 90° in Bezug auf die horizontale Ebene aufweisen und wobei die Waschöffnungen oder Löcher (15') des oberen Abschnitts des Verteilers (11) eine Durchgangsfläche im Bereich von 6 bis 25% der Durchgangsfläche der Waschöffnungen oder Löcher (15) der inneren Seitenwand (12) des Abscheiders (10) aufweisen.

## Revendications

1. Procédé de lavage d'un séparateur (10) pour le traitement de l'urée fondue, comprenant une recirculation continue d'au moins une partie de l'urée fondue prélevée au fond dudit séparateur, dans lequel ladite partie de l'urée fondue prélevée est continuellement rincée sur la partie supérieure de la paroi latérale cylindrique (12) du séparateur, ledit flux étant réparti sur toute la circonférence de la paroi latérale cylindrique interne dudit séparateur.

2. Procédé selon la revendication 1, dans lequel le flux d'urée fondue prélevé et recirculé est alimenté au-dessus de la (des) ligne(s) tangente(s) qui relie(nt) la partie supérieure de la paroi latérale cylindrique interne du séparateur au capuchon supérieur qui forme le sommet du séparateur.

3. Procédé selon une ou plusieurs des revendications précédentes, dans lequel le rapport entre la quantité d'urée recyclée et la quantité totale d'urée sortant du séparateur est compris dans un intervalle allant de 66 % à 80 % en poids.

4. Procédé selon une ou plusieurs des revendications précédentes, dans lequel le rapport entre la quantité d'urée recyclée et la quantité d'urée alimentant un réacteur de synthèse de mélamine est compris entre 200 et 400 % en poids.

5. Procédé selon une ou plusieurs des revendications précédentes, dans lequel le recyclage de l'urée est effectué en répartissant un film liquide d'urée sur toute la circonférence de la paroi latérale cylindrique du séparateur, sans présence de gouttelettes en chute libre et/ou sans formation de phases nébuleuses.

6. Séparateur (10) pour le traitement de l'urée fondue comprenant au moins un élément distributeur (11) configuré pour alimenter en urée à recycler ledit séparateur (10), dans lequel ledit élément distributeur (11) est positionné au-dessus des lignes tangentes de connexion (5) entre la partie supérieure de la paroi latérale cylindrique interne (12) du séparateur (10) et le capuchon supérieur qui forme le sommet du séparateur (10).

7. Séparateur selon la revendication 6, dans lequel l'au moins un élément distributeur (11) est positionné à l'intérieur ou à l'extérieur du séparateur (10).

8. Séparateur selon la revendication 7, dans lequel l'élément distributeur (11), positionné à l'extérieur, a au moins une entrée tangentielle unidirectionnelle (13) ou au moins une entrée tangentielle bidirectionnelle (13) ou est un distributeur circonférentiel coaxial (11).

9. Séparateur selon la revendication 7, dans lequel l'élément distributeur (11), positionné à l'extérieur, a au moins quatre entrées tangentielles unidirectionnelles (13), lesdites entrées (13) étant de préférence positionnées à 90° l'une par rapport à l'autre, ou il a au moins trois entrées tangentielles bidirectionnelles (13), lesdites entrées (13) étant positionnées à 120° l'une par rapport à l'autre.

10. Séparateur selon la revendication 8, dans lequel l'élément distributeur coaxial circonférentiel (11) consiste en un demi-tube, soudé sur la surface externe de la paroi latérale (12) du séparateur (10), dans lequel sur ladite surface externe de la paroi latérale (12) du séparateur (10), il y a une série d'ouvertures (16) appropriées pour alimenter et distribuer l'urée en recirculation le long de toute la circonférence de la paroi latérale cylindrique interne (12) du séparateur (10), lesdites ouvertures (16) étant de préférence pourvues à l'intérieur d'un déflecteur (17).

11. Séparateur selon la revendication 7, dans lequel l'élément distributeur (11), positionné à l'intérieur, consiste en un tube (14), coaxial avec le séparateur, pourvu d'ouvertures (15), de préférence des trous, adaptés à l'alimentation et à la distribution de l'urée en recirculation sur toute la circonférence de la paroi latérale cylindrique interne du séparateur.

12. Séparateur selon la revendication 11, dans lequel l'élément distributeur (11), positionné à l'intérieur, est unidirectionnel et les ouvertures (15) du tube coaxial (14) font face à la paroi latérale (12) du séparateur (10), de préférence avec un angle de 30° vers le bas par rapport au plan horizontal.

13. Séparateur selon la revendication 11, dans lequel l'élément distributeur (11), positionné à l'intérieur, est bidirectionnel et les ouvertures (15) du tube coaxial (14) font face à la paroi latérale (12) du séparateur (10), de préférence avec un angle de 30° vers le bas par rapport au plan horizontal, plus préférentiellement le tube coaxial (14) a une alternance d'ouvertures ou de trous (15, 15'), dans lequel les ouvertures ou trous de lavage (15) de la paroi latérale interne (12) du séparateur (10) ont un angle de 30° vers le bas par rapport au plan horizontal et les ouvertures ou trous de lavage (15') de la partie supérieure du distributeur (11) ont un angle de 90° vers le haut par rapport au plan horizontal et dans lequel les ouvertures ou trous de lavage (15') de la partie supérieure du distributeur (11) ont une surface de passage allant de 6 à 25 % de la surface de passage des ouvertures ou trous de lavage (15) de la paroi latérale interne (12) du séparateur (10).
